# FASCICULE DE BREVET EUROPEEN

(11) **EP 2 179 501 B1**
(45) Date de publication et mention de la délivrance du brevet: **28.12.2011**
(21) Numéro de dépôt: 08789374.9
(22) Date de dépôt: 21.07.2008
(51) Int. Cl.: H02P 25/04

(54) **DISPOSITIF D'ALIMENTATION D'UN ACTIONNEUR DOMOTIQUE ET PROCEDE DE FONCTIONNEMENT D'UN TEL DISPOSITIF**
EINRICHTUNG ZUR VERSORGUNG EINES HAUSAUTOMATISIERUNGSSTELLGLIEDES UND BETRIEBSVERFAHREN DER EINRICHTUNG
DEVICE FOR SUPPLYING A HOME AUTOMATION ACTUATOR AND OPERATION METHOD OF SAID DEVICE

(30) Priorité: 23.07.2007 FR 0705340
(43) Date de publication de la demande: 28.04.2010
(73) Titulaire: Somfy SAS, 74300 Cluses (FR)
(72) Inventeur: BRUNO, Serge, F-74460 Marnaz (FR)
(74) Mandataire: Bugnion Genève
(86) Numéro de dépôt international: PCT/IB2008/052911
(87) Numéro de publication internationale: WO 2009/013693

(56) Documents cités:
- EP-A- 0 921 631
- US-A- 4 431 958
- US-A- 4 520 303

## Description

L'invention concerne un dispositif d'alimentation des deux enroulements diphasés d'un moteur alternatif monophasé à deux sens de rotation. Elle concerne aussi un actionneur comprenant un moteur et un tel dispositif d'alimentation. Elle concerne enfin le procédé de fonctionnement du dispositif d'alimentation.

Un tel moteur est utilisé dans des applications domestiques comme des lave-linges, et des applications domotiques, en particulier pour l'entraînement d'écrans mobiles dans le bâtiment : stores, volets roulants, portes de garage, écrans de projection multimédia etc.

Le moteur comprend deux enroulements identiques décalés dans l'espace de 90° et normalement parcourus par des courants égaux et en quadrature.

Pour engendrer de tels courants à partir d'un réseau alternatif monophasé, il est connu d'utiliser un condensateur de déphasage, disposé en série avec l'un des enroulements tandis que l'autre enroulement est alimenté directement sur le réseau. Selon les besoins, le condensateur est utilisé uniquement lors du démarrage ou est utilisé de manière permanente.

On a depuis longtemps cherché à remplacer le condensateur de déphasage par d'autres moyens, en particulier par des moyens de commutation. Le brevet US 4,520,303 décrit de nombreuses solutions, dont une est reproduite aux figures 1 et 2 de la présente demande. Cette solution est présentée de manière purement théorique, et nécessite des interrupteurs bidirectionnels, susceptibles d'être commandés à la fois en ouverture et en fermeture, avec quatre changements d'état par période de la tension d'alimentation du secteur.

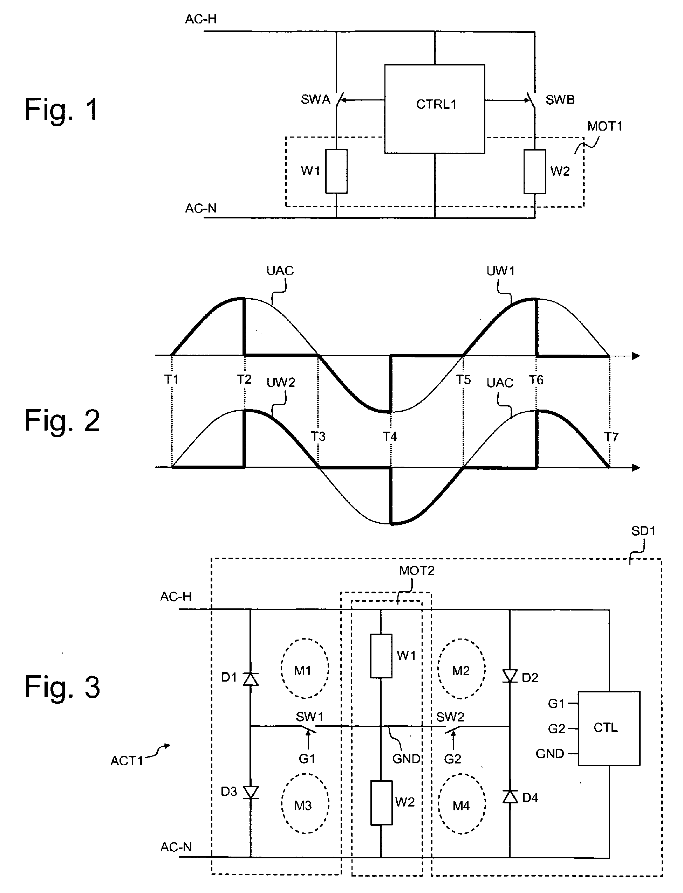

La figure 1 représente schématiquement un moteur MOT1 à induction diphasé, alimenté par un dispositif tel que décrit en figure 8 du brevet US 4,520,303. Le moteur MOT1 comprend un premier enroulement W1 et un deuxième enroulement W2. Le dispositif permet de fournir aux bornes de chaque enroulement une tension d'alimentation telle que représentée sur la figure 2, figure analogue à la figure 9 du brevet cité.

On désigne par tension réseau UAC la tension alternative délivrée sur le secteur entre un conducteur de phase AC-H et un conducteur de neutre AC-N. On désigne par UW1 la tension aux bornes du premier enroulement W1 et par UW2 la tension aux bornes du deuxième enroulement UW2. Dans le dispositif selon l'art antérieur, chaque enroulement comporte une extrémité reliée au conducteur de neutre AC-N, tandis que l'autre extrémité est reliée au conducteur de phase AC-H par un interrupteur commandé, respectivement désigné par SWA et SWB.

Une unité de contrôle CTRL1 raccordée au conducteur de phase et au conducteur de neutre permet d'actionner les interrupteurs commandés de manière à ce que chaque enroulement soit alimenté seul et en alternance tous les quarts de période de la tension secteur.

Ainsi obtient-on deux tensions en quadrature :

| | | |
|---|---|---|
| Entre T1 et T2 : | UW1 = UAC, | UW2 = 0. |
| Entre T2 et T3 : | UW1 = 0, | UW2 = UAC. |
| Entre T3 et T4 : | UW1 = UAC, | UW2 = 0. |
| Entre T4 et T5 : | UW1 = 0, | UW2 = UAC. |

Cependant, comme mentionné plus haut, cet art antérieur suppose l'existence d'interrupteurs commandés bidirectionnels et activables simultanément à l'ouverture et à la fermeture. Ces composants ne sont disponibles que pour des applications de forte puissance, et non pour les applications dites fractionnaires (puissance inférieure au kilowatt) auxquelles s'applique l'invention.

De plus, chaque interrupteur commandé SWA ou SWB change d'état quatre fois par période de la tension secteur. La fréquence de commutation des interrupteurs est un facteur dimensionnant important déterminant notamment la durée de vie de l'interrupteur. Ainsi, plus la fréquence de commutation est importante et plus la durée de vie du composant est réduite.

On connaît aussi du brevet US 4,431,958 un dispositif d'alimentation d'un moteur asynchrone comprenant deux bobinages montés en série entre des conducteurs de phase et de neutre les reliant au réseau. Des interrupteurs commandés sont prévus en parallèle de chaque bobinage pour court-circuiter alternativement l'un et l'autre des bobinages et, ainsi, alimenter alternativement sous la tension du réseau l'un et l'autre des bobinages. Ce dispositif d'alimentation présente les mêmes inconvénients que le dispositif décrit dans le brevet US 4,520,303 : à savoir, l'existence d'interrupteurs commandés bidirectionnels et activables simultanément à l'ouverture et à la fermeture. Ces composants ne sont disponibles que pour des applications de forte puissance, et non pour les applications dites fractionnaires (puissance inférieure au kilowatt) auxquelles s'applique l'invention. Il est remédié à cet inconvénient avec la structure d'interrupteur de la figure 9 de ce brevet permettant l'utilisation d'un interrupteur unidirectionnel, mais dans ce cas les interrupteurs ne présentent pas de référence commune.

De plus, chaque interrupteur commandé change d'état quatre fois par période de la tension secteur.

Le brevet EP 0 921 631 de la demanderesse décrit une solution permettant l'usage d'interrupteurs unidirectionnels, mais elle impose de diviser l'un des enroulements en deux demi-enroulements, ce qui est également proposé dans le brevet US 4,520,303.

Tous ces montages se révèlent complexes et coûteux, ce qui explique que, sauf dans des applications d'alimentation diphasée pour des démarrages brefs, les condensateurs traditionnels n'ont pas été abandonnés malgré leurs inconvénients connus (susceptibilité climatique, durée de vie réduite). Ces inconvénients sont le plus souvent plus importants pour les applications domotiques, souvent en façade de bâtiment, que pour les applications domestiques intérieures au bâtiment et subissant moins la contrainte climatique.

Le but de l'invention est de fournir un dispositif d'alimentation palliant les inconvénients évoqués précédemment et améliorant les dispositifs d'alimentation connus de l'art antérieur. En particulier, l'invention propose un dispositif d'alimentation de structure simple et à prix de revient modéré permettant de se passer de l'utilisation d'un condensateur de déphasage.

Le dispositif d'alimentation selon l'invention est défini par la revendication 1.

Différents modes de réalisation du dispositif d'alimentation selon l'invention sont définis par les revendications dépendantes 2 à 6.

L'actionneur selon l'invention est défini par la revendication 7.

Le procédé de fonctionnement selon l'invention est défini par la revendication 8.

Un mode de réalisation du procédé de fonctionnement selon l'invention est défini par la revendication 9.

Le dessin annexé représente, à titre d'exemples, deux modes de réalisation d'un dispositif d'alimentation selon l'invention.
La figure 1 représente schématiquement un moteur comprenant un dispositif selon l'art antérieur pour l'alimentation diphasée de deux enroulements.
La figure 2 représente les tensions d'alimentation du réseau alternatif et les tensions aux bornes de chaque enroulement de la figure 1.
La figure 3 représente un actionneur comportant un premier mode de réalisation d'un dispositif d'alimentation selon l'invention.
La figure 4 représente un actionneur comportant un deuxième mode de réalisation d'un dispositif d'alimentation selon l'invention.
La figure 5 représente un procédé de fonctionnement du premier mode de réalisation d'un dispositif d'alimentation selon l'invention.
La figure 6 représente un procédé de fonctionnement du deuxième mode de réalisation d'un dispositif d'alimentation selon l'invention.

La figure 3 représente un actionneur ACT1 comprenant un moteur MOT2 représenté comme en figure 1 par son premier enroulement W1 et par son deuxième enroulement W2. Ces enroulements sont identiques à ceux du moteur de la figure 1.

L'actionneur comprend également un dispositif d'alimentation SD1 selon un premier mode de réalisation.

Dans ce mode de réalisation, le dispositif d'alimentation est relié en entrée au secteur par des conducteurs de phase AC-H et de neutre AC-N et en sortie aux enroulements W1 et W2 du moteur, ces enroulements étant montés en série entre les conducteurs de phase et de neutre. Une première extrémité du premier enroulement W1 est connectée au conducteur de phase AC-H, une deuxième extrémité du premier enroulement est connectée à une première extrémité du deuxième enroulement W2, cette connexion définissant un point commun GND, et la deuxième extrémité du deuxième enroulement est connectée au conducteur de neutre AC-N.

Le point commun GND est raccordé à un premier interrupteur commandé SW1 connecté aux anodes communes d'une première diode D1 et d'une troisième diode D3. La cathode de la première diode D1 est connectée au conducteur de phase AC-H, la cathode de la troisième diode D3 est connectée au conducteur de neutre AC-N. Le point commun GND est également raccordé à un deuxième interrupteur commandé SW2 connecté aux cathodes communes d'une deuxième diode D2 et d'une quatrième diode D4. La cathode de la deuxième diode D2 est connectée au conducteur de phase AC-H, la cathode de la quatrième diode D4 est connectée au conducteur de neutre AC-N.

Un bloc de contrôle CTL est raccordé au conducteur de phase AC-H et au conducteur de neutre AC-N, à la fois pour l'alimentation électrique dudit bloc et aussi pour émettre des signaux de commande en synchronisme avec la tension du réseau. Ces signaux de commande sont référencés par rapport au point commun GND auquel est connecté le bloc de contrôle. Un premier signal de commande G1 est appliqué au premier interrupteur commandé SW1. Un deuxième signal de commande G2 est appliqué au deuxième interrupteur commandé SW2 .

Les deux interrupteurs commandés sont de type unidirectionnel. Le premier interrupteur commandé doit pouvoir établir ou interrompre un courant circulant depuis le point commun GND vers les anodes communes. On utilise par exemple un transistor MOS de type canal P. Le deuxième interrupteur commandé doit pouvoir établir ou interrompre un courant circulant depuis les cathodes communes vers le point commun GND. On utilise par exemple un transistor MOS de type canal N.

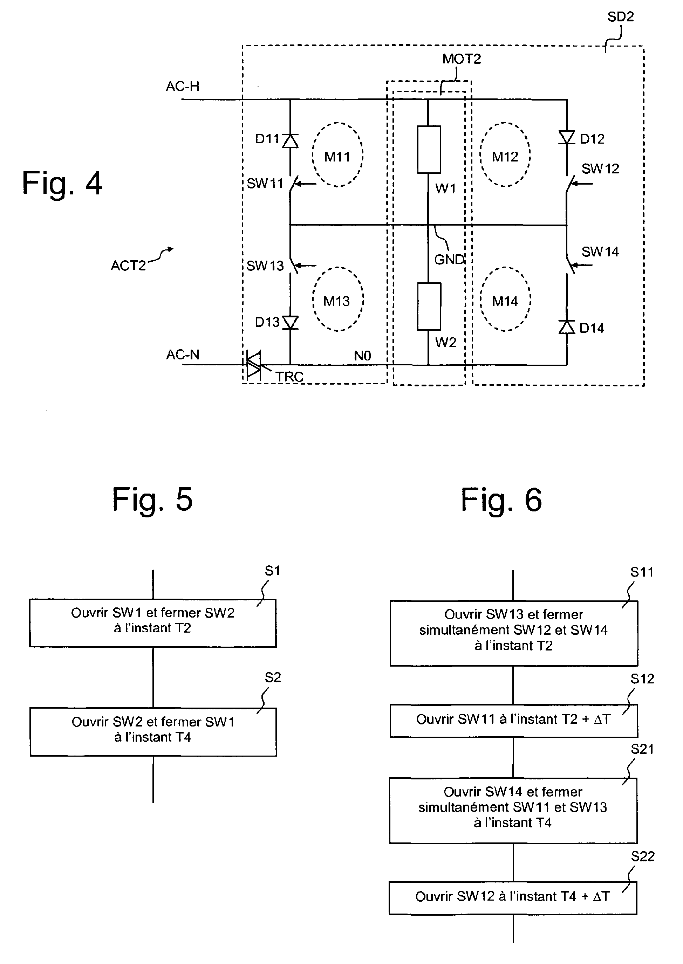

Cette topologie simple permet d'engendrer les tensions de la figure 2 aux bornes des enroulements du moteur en appliquant le procédé de fonctionnement décrit en figure 5.

Un premier ordre de commutation (ouverture du premier interrupteur commandé SW1, fermeture du deuxième interrupteur commandé SW2) est donné dans une première étape S1, à l'instant T2, pendant que la tension réseau UAC est positive à sa valeur maximum.

Entre les instants T2 et T3, la conduction est assurée par la deuxième diode D2 et le deuxième interrupteur commandé SW2. Le premier enroulement W1 est donc en court-circuit (UW1 = 0) et le deuxième enroulement W2 est alimenté (UW2 = UAC).

A l'instant T3, il y a changement de signe de la tension réseau UAC, donc commutation naturelle entre la deuxième diode D2 (qui se bloque) et la quatrième diode D4 (qui conduit). C'est maintenant le deuxième enroulement qui est en court-circuit (UW2 = 0) et le premier enroulement W1 qui est alimenté (UW1 = UAC).

Un deuxième ordre de commutation (ouverture du deuxième interrupteur commandé SW2, fermeture du premier interrupteur commandé SW1) est donné dans une deuxième étape S2, à l'instant T4, pendant que la tension réseau UAC est négative à sa valeur minimum.

Entre les instants T4 et T5, la conduction est assurée par la première diode D1 et le premier interrupteur commandé SW1. Le premier enroulement W1 est donc en court-circuit (UW1 = 0) et le deuxième enroulement W2 est alimenté (UW2 = UAC).

A l'instant T5, il y a changement de signe de la tension réseau UAC, donc commutation naturelle entre la première diode D1 (qui se bloque) et la troisième diode D3 (qui conduit). C'est maintenant le deuxième enroulement qui est en court-circuit (UW2 = 0) et le premier enroulement W1 qui est alimenté (UW1 = UAC).

Ainsi, seules deux commutations par période suffisent. De plus l'inversion de sens de rotation est obtenue par permutation des actions : pour que la tension UW2 aux bornes du deuxième enroulement soit en avance de phase sur la tension UW1 aux bornes du premier enroulement, il suffit d'ouvrir SW2 et fermer SW1 à l'instant T2 (et non T4) et il suffit d'ouvrir SW1 et fermer SW2 à l'instant T4 (et non T2).

Les deux signaux de commande sont en principe complémentaires, mais il est avantageux de les décaler légèrement et de leur donner une forme trapézoïdale plutôt que rectangulaire de manière à limiter les surtensions liée à l'ouverture des interrupteurs et le contenu harmonique du courant de ligne sur le réseau. Les surtensions peuvent être absorbées par des circuits passifs connus de l'homme du métier.

Ainsi, comme représenté sur la figure 3, chaque enroulement est inclus dans deux mailles ; M1 et M2 en ce qui concerne l'enroulement W1 et M3 et M4 en ce qui concerne l'enroulement W2. De fait, chaque enroulement peut selon la polarité de la tension du secteur être alimenté par l'une ou l'autre de ces mailles. Chaque maille comprend au moins une diode et au moins un interrupteur commandé, de type unidirectionnel. Dans ce premier mode de réalisation, chaque interrupteur commandé est commun à deux mailles : l'interrupteur commandé SW1 est commun aux mailles M1 et M3 et l'interrupteur commandé SW2 est commun aux mailles M2 et M4.

Cependant, le deuxième mode de réalisation du dispositif d'alimentation SD2 présente l'avantage d'une suppression naturelle des surtensions.

Ce deuxième mode diffère du premier mode en ce que les anodes communes et les cathodes communes deviennent séparées et en ce que les interrupteurs commandés sont dédoublés, à raison d'un interrupteur commandé par diode. Dans les deux modes de réalisation, les enroulements sont disposés en série entre le conducteur de neutre et le conducteur de phase.

Comme représenté sur la figure 4, chaque enroulement est inclus dans deux mailles ; M11 et M12 en ce qui concerne l'enroulement W1 et M13 et M14 en ce qui concerne l'enroulement W2. De fait, chaque enroulement peut selon la polarité de la tension du secteur être alimenté par l'une ou l'autre de ces mailles. Chaque maille comprend au moins une diode et au moins un interrupteur commandé, de type unidirectionnel. Dans ce deuxième mode de réalisation, chaque maille comprend un interrupteur commandé propre à la maille.

Un interrupteur commandé bidirectionnel TRC, par exemple un triac, est connecté entre le conducteur de neutre AC-N et un conducteur interne de neutre N0. Les enroulements du moteur sont disposés comme dans le premier mode, avec un point commun GND, à ceci près que la deuxième extrémité du deuxième enroulement est connectée au conducteur interne de neutre N0.

Le point commun GND est connecté à un premier interrupteur commandé SW11 également connecté à l'anode d'une première diode D11 dont la cathode est connectée au conducteur de phase AC-H.

Le point commun GND est aussi connecté à un deuxième interrupteur commandé SW12 également connecté à la cathode d'une deuxième diode D12 dont l'anode est connectée au conducteur de phase AC-H.

Le point commun GND est aussi connectée à un troisième interrupteur commandé SW13 également connecté à l'anode d'une troisième diode D13 dont la cathode est connectée au conducteur interne de neutre N0.

Le point commun GND est aussi connecté à un quatrième interrupteur commandé SW14 également connecté à la cathode d'une quatrième diode D14 dont l'anode est connectée au conducteur interne de neutre N0.

Le bloc de contrôle n'est pas représenté pour simplifier.

Le procédé de fonctionnement du dispositif selon le deuxième mode de réalisation est voisin de celui du premier mode et est détaillé dans la figure 6.

Dans une première étape S11, se déroulant à l'instant T2, on ouvre le troisième interrupteur commandé SW13 (qui assurait la conduction dans le premier enroulement W1) et on ferme simultanément le deuxième interrupteur commandé SW12 et le quatrième interrupteur commandé SW14. La tension réseau UAC étant, à cet instant, positive, la conduction dans le deuxième enroulement W2 est assurée par la deuxième diode D12. On a donc, comme dans le premier mode de réalisation et de fonctionnement : UW2 = UAC et UW1 = 0.

Au bout d'un court intervalle de temps ΔT, lors d'une deuxième étape S12, on ouvre le premier interrupteur commandé SW11, qui était primitivement fermé. Cette action est sans effet sur la conduction et sera expliquée par la suite.

A l'instant T3, il y a commutation naturelle entre les diodes D12 (qui se bloque) et D14 (qui conduit) et c'est le premier enroulement W1 qui devient alimenté. On a donc, comme dans le premier mode de réalisation et de fonctionnement : UW1 = UAC et UW2 = 0.

Lors d'une troisième étape S21, se déroulant à l'instant T4, on ouvre le quatrième interrupteur commandé SW14 (qui assurait la conduction dans le premier enroulement W1) et on ferme simultanément le premier interrupteur commandé SW11 et le troisième interrupteur commandé SW13. La tension réseau UAC étant à cet instant négative, la conduction dans le deuxième enroulement. W2 est assurée par la première diode D11. On a donc, comme dans le premier mode de réalisation et de fonctionnement : UW2 = UAC et UW1 = 0.

Au bout d'un court intervalle de temps ΔT, lors d'une quatrième étape S22, on ouvre le deuxième interrupteur commandé SW12, qui était primitivement fermé. Cette action est sans effet sur la conduction et sera expliquée par la suite.

A l'instant T5, il y a commutation naturelle entre les diodes D12 et D14 et c'est le premier enroulement W1 qui devient alimenté : UW1 = UAC et UW2=0.

On remarque que, lorsqu'on ouvre un interrupteur commandé qui alimentait un enroulement, cet enroulement se trouve, grâce à l'interrupteur commandé dont on décale l'ouverture d'un court intervalle de temps ΔT, placée en parallèle avec une diode disposée en configuration de diode de roue-libre.

De ce fait, la surtension aux bornes du premier enroulement W1 qui devrait apparaître immédiatement après l'instant T6 se trouve écrêtée par la première diode D11. De même, la surtension aux bornes du premier enroulement W1 qui devrait apparaître immédiatement après l'instant T4 se trouve écrêtée par la deuxième diode D12.

Lors d'une inversion du sens de rotation du moteur, les surtensions à écrêter se produiraient sur le deuxième enroulement W2 et le rôle de diode de roue-libre serait alternativement tenu par la troisième diode D13 et la quatrième diode D14.

L'intervalle de temps ΔT est suffisant pour que l'énergie emmagasinée dans un enroulement ait pu s'y dissiper, ce qui dépend de l'inductance et de la résistance de l'enroulement. Une valeur typique est 2 milli-secondes à 50 Hz. Il suffit que cet intervalle de temps soit inférieur au quart de période pour avoir un fonctionnement correct.

L'interrupteur commandé bidirectionnel TRC permet de couper l'alimentation du dispositif et peut être remplacé par un contact de relais. II peut aussi servir à un découpage de la tension d'alimentation pour permettre une variation de vitesse du moteur, mais ce rôle est naturellement tenu par les quatre interrupteurs commandés. Ceux-ci sont de type unidirectionnel. Le premier interrupteur commandé et le troisième interrupteur commandé sont par exemple réalisés avec des transistors MOS de type P. Le deuxième interrupteur commandé et le quatrième interrupteur commandé sont par exemple réalisés avec des transistors MOS de type N.

L'interrupteur commandé bidirectionnel TRC peut aussi être disposé sur le conducteur de phase AC-H, ou encore en série avec l'un des enroulements, sans que le fonctionnement soit différent. Ce dernier cas permet éventuellement de l'intercaler entre les premier et deuxième bobinages et ainsi qu'il présente une connexion avec la référence commune GND. De même, un fusible ou un disjoncteur thermique peut être intercalé sur le conducteur de phase, sur le conducteur de neutre ou en série avec les enroulements tout en restant dans le cadre de l'invention.

## Revendications

1. Dispositif (SD1 ; SD2) d'alimentation biphasée pour alimenter, sur un réseau monophasé alternatif, un moteur (MOT2) comprenant un premier enroulement (W1) et un deuxième enroulement (W2) en série entre un conducteur de neutre (AC-H) et un conducteur de phase (AC-N), le dispositif comprenant des moyens de court-circuit incluant des diodes (D1, D2, D3, D4 ; D11, D12, D13, D14) et des interrupteurs commandés (SW1, SW2; SW11, SW12, SW13, SW14) pour court-circuiter alternativement le premier et le deuxième enroulement, **caractérisé en ce que** les moyens de court-circuit forment un premier couple de mailles (M1, M2 ; M11, M12) avec le premier enroulement et un deuxième couple de mailles (M3, M4 ; M13, M14) avec le deuxième enroulement, chaque maille comprenant une diode (D1, D2, D3, D4 ; D11, D12, D13, D14) et un interrupteur commandé (SW1, SW2 ; SW11, SW12, SW13, SW14) de type unidirectionnel, les interrupteurs commandés des deux mailles d'un couple étant distincts.

2. Dispositif d'alimentation selon la revendication 1, **caractérisé en ce que** une première diode (D1 ; D11) et une deuxième diode (D2 ; D12), de polarités opposées, sont connectées entre le conducteur de phase et deux interrupteurs commandés tandis qu'une troisième diode (D3 ; D13) et une quatrième diode (D4 ; D14), de polarités opposées, sont connectées entre le conducteur de neutre et deux interrupteurs commandés.

3. Dispositif d'alimentation selon l'une des revendications précédentes, **caractérisé en ce que** chaque interrupteur commandé est connecté au point commun des deux enroulements.

4. Dispositif d'alimentation selon l'une des revendications précédentes, **caractérisé en ce que** les interrupteurs commandés sont des transistors MOS.

5. Dispositif d'alimentation selon l'une des revendications précédentes, **caractérisé en ce qu'**il comprend deux interrupteurs commandés (SW1, SW2), chaque interrupteur commandé étant commun à deux mailles relatives chacune à un enroulement différent.

6. Dispositif d'alimentation selon l'une des revendications 1 à 4, **caractérisé en ce qu'**il comprend quatre interrupteurs commandés (SW11, SW12, SW13, SW14), chaque interrupteur commandé étant propre à chaque maille.

7. Actionneur (ACT1 ; ACT2) comprenant un dispositif d'alimentation selon l'une des revendications précédentes et un moteur comprenant un premier et un deuxième enroulements disposés en série entre le conducteur de neutre et le conducteur de phase.

8. Procédé de fonctionnement d'un dispositif d'alimentation (SD1 ; SD2) selon l'une des revendications 1 à 6, **caractérisé en ce qu'**il comprend au moins une succession d'alternances des étapes suivantes :
- court-circuiter le premier enroulement (W1) du moteur (MOT2) alors que la tension du réseau est appliquée aux bornes du montage série des premier et deuxième enroulements,
- court-circuiter le deuxième enroulement (W2) du moteur alors que la tension du réseau est appliquée aux bornes du montage série des premier et deuxième enroulements,
des transitions entre les étapes précédentes ayant lieu, au moins sensiblement, à chaque changement de signe de la tension du réseau, ces transitions étant la conséquence de changements d'état de diodes.

9. Procédé de fonctionnement selon la revendication précédente, **caractérisé en ce que** des transitions entre les étapes précédentes ayant lieu, au moins sensiblement, à chaque fois que la tension du réseau atteint un extrémum sont réalisées par commutation d'interrupteurs commandés, un court-circuit bidirectionnel du dernier enroulement alimenté étant maintenu pendant une durée prédéterminée.

## Claims

1. Two-phase power supply device (SD1; SD2) for powering, on a single-phase AC network, a motor (MOT2) comprising a first winding (W1) and a second winding (W2) in series between a neutral conductor (AC-H) and a phase conductor (AC-N), the device comprising short-circuit means including diodes (D1, D2, D3, D4; D11, D12, D13, D14) and controlled switches (SW1, SW2; SW11, SW12, SW13, SW14) for alternately short-circuiting the first and the second winding, **characterized in that** the short-circuit means form a first pair of meshes (M1, M2; M11, M12) with the first winding and a second pair of meshes (M3, M4; M13, M14) with the second winding, each mesh comprising a diode (D1, D2, D3, D4; D11, D12, D13, D14) and a controlled switch (SW1, SW2; SW11, SW12, SW13, SW14) of unidirectional type, the controlled switches of the two meshes of a pair being separate.

2. Power supply device according to Claim 1, **characterized in that** a first diode (D1; D11) and a second diode (D2; D12), of opposite polarities, are connected between the phase conductor and two controlled switches whereas a third diode (D3; D13) and a fourth diode (D4; D14), of opposite polarities, are connected between the neutral conductor and two controlled switches.

3. Power supply device according to one of the preceding claims, **characterized in that** each controlled switch is connected to the common point of the two windings.

4. Power supply device according to one of the preceding claims, **characterized in that** the controlled switches are MOS transistors.

5. Power supply device according to one of the preceding claims, **characterized in that** it comprises two controlled switches (SW1, SW2), each controlled switch being common to two meshes each relating to a different winding.

6. Power supply device according to one of Claims 1 to 4, **characterized in that** it comprises four controlled switches (SW11, SW12, SW13, SW14), each controlled switch being specific to each mesh.

7. Actuator (ACT1; ACT2) comprising a power supply device according to one of the preceding claims and a motor comprising a first and a second winding which are arranged in series between the neutral conductor and the phase conductor.

8. Method for operating a power supply device (SD1; SD2) according to one of Claims 1 to 6, **characterized in that** it comprises at least one succession of alternations of the following steps:
- short-circuiting the first winding (W1) of the motor (MOT2) while the network voltage is applied to the terminals of the series-connected first and second windings,
- short-circuiting the second winding (W2) of the motor while the network voltage is applied to the terminals of the series-connected first and second windings,
transitions between the preceding steps taking place, at least substantially, on each change of sign of the network voltage, these transitions being the consequence of diode state changes.

9. Operating method according to the preceding claim, **characterized in that** transitions between the preceding steps taking place, at least substantially, each time the network voltage reaches an extremum are produced by switching controlled switches, a bidirectional short-circuit of the last powered winding being maintained for a predetermined time.

## Patentansprüche

1. Vorrichtung (SD1; SD2) zur zweiphasigen Stromversorgung eines Motors (MOT2) an einem einphasigen Wechselstromnetz, wobei der Motor eine erste Wicklung (W1) und eine zweite Wicklung (W2) besitzt, welche in Reihe zwischen einem Nullleiter (AC-H) und einem Phasenleiter (AC-N) angeschlossen sind, und wobei die Vorrichtung Schaltmittel mit Dioden (D1, D2, D3, D4; D11, D12, D13, D14) und gesteuerten Schaltern (SW1, SW2, SW11, SW12, SW13; SW14) zum abwechselnden Kurzschliessen der ersten und der zweiten Wicklung aufweist, **dadurch gekennzeichnet, dass** diese Schaltmittel ein erstes Maschenpaar (M1, M2; M11, M12) mit der ersten Wicklung und ein zweites Maschenpaar (M3, M4; M13, M14) mit der zweiten Wicklung bilden, wobei jede Masche eine Diode (D1, D2, D3, D4; D11, D12, D13, D14) sowie einen gesteuerten Schalter (SW1, SW2,; SW11, SW12, SW13, SW14) vom einseitig gerichteten Typ aufweist, und wobei die gesteuerten Schalter der beiden Maschen eines Paars unterschiedlich sind.

2. Verfahren zur Stromversorgung nach Anspruch 1, **dadurch gekennzeichnet, dass** eine erste Diode (D1; D11) und eine zweite Diode (D2; D12) mit entgegengesetzten Polaritäten zwischen dem Phasenleiter und zwei gesteuerten Schaltern geschaltet sind, während eine dritte Diode (D3; D13) und eine vierte Diode (D4; D14) mit entgegengesetzten Polaritäten zwischen dem Nulleiter und zwei gesteuerten Schaltern angeschlossen sind.

3. Verfahren zur Stromversorgung nach einem der vorstehenden Ansprüche, **dadurch gekennzeichnet, dass** jeder gesteuerte Schalter mit dem gemeinsamen Anschlusspunkt der beiden Wicklungen verbunden ist.

4. Verfahren zur Stromversorgung nach einem der vorstehenden Ansprüche, **dadurch gekennzeichnet, dass** die gesteuerten Schalter MOS-Transistoren sind.

5. Vorrichtung zur Stromversorgung nach einem der vorstehenden Ansprüche, **dadurch gekennzeichnet, dass** sie zwei gesteuerte Schalter (SW1, SW2) aufweist, wobei jeder gesteuerte Schalter zwei Maschen gemeinsam ist, von denen jede einer unterschiedlichen Wicklung zugehört.

6. Vorrichtung zur Stromversorgung nach einem der Ansprüche 1 bis 4, **dadurch gekennzeichnet, dass** sie vier gesteuerte Schalter (SW11, SW12, SW13, SW14) aufweist, wobei jeder gesteuerte Schalter jeder Masche zugehört.

7. Antrieb (ACT1; ACT2), mit einer Vorrichtung zur Stromversorgung nach einem der vorstehenden Ansprüche und einem Motor, welcher eine erste Wicklung und eine zweite Wicklung aufweist, die zwischen dem Nullleiter und dem Phasenleiter angeschlossen sind.

8. Verfahren zum Betrieb einer Vorrichtung zur Stromversorgung (SD1; SD2) nach einem der Ansprüche 1 bis 6, **dadurch gekennzeichnet, dass** es mindestens eine wechselnde Aufeinanderfolge der folgenden Schritte umfasst:
- Kurzschliessen der ersten Wicklung (W1) des Motors (MOT2), während die Netzspannung an die Anschlüsse der Reihenschaltung der ersten mit der zweiten Wicklung angelegt wird,
- Kurzschliessen der zweiten Wicklung (W2) des Motors, während die Netzspannung an die Anschlüsse der Reihenschaltung der ersten mit der zweiten Wicklung angelegt wird,
wobei bei jeder Änderung des Vorzeichens der Netzspannung Übergänge zwischen den vorstehenden Schritten stattfinden, und zwar mindestens in merklichem Umfang, und wobei diese Übergänge die Folge des Wechsels des Zustandes von Dioden sind.

9. Verfahren zum Betrieb nach vorstehendem Anspruch, **dadurch gekennzeichnet, dass** die Übergänge zwischen den vorstehend definierten Schritten, welche mindestens in wesentlichem Umfang jedes Mal stattfinden, wenn die Netzspannung einen Extremwert annimmt, durch Umschalten von gesteuerten Schaltern verwirklicht werden, wobei ein bidirektionaler Kurzschluss der zuletzt mit Energie versorgten Wicklung während einer vorbestimmten Zeitdauer aufrecht erhalten wird.
